# EUROPEAN PATENT APPLICATION

(11) **EP 1 132 836 A1**
(43) Date of publication of application: **12.09.2001**
(21) Application number: 00113489.9
(22) Date of filing: 26.06.2000
(51) Int. Cl.: G06F 17/60

(54) **System and method for valuating brands by using an online stock trading technique**

(30) Priority: 08.03.2000 KR 1147800
(71) Applicant: Nextar Communications Inc., Seoul (KR)
(72) Inventor: Hwang, Seon Jin, Chung-Gu, Seoul (KR); Choi, Ji Seon, Chung-Gu, Seoul (KR); Oh, Ki Nam, Chung-Gu, Seoul (KR)
(74) Representative: Goddar, Heinz J., Dr.

(57) **Abstract**

A system and method valuates brands by employing an online stock trading technique implemented between a server and a multiplicity of clients connected through a communication network such as Internet. The clients participate in a brand stock trading process in which stock prices of all brands are determined under same stock transaction conditions by using the online stock trading technique, and the values and the recognition rates of the brands are estimated based on the determined brand stock prices. For the above purposes, this system comprises a communication network, client terminals associated with the clients and connected to the communication network, wherein the clients trade stocks for the brands via the communication network, and a server connected to the communication network for performing a stock trading process requested by the client terminals to thereby valuating the brands based on stock prices for the brands resulting from the stock trading process.

## Description

The present invention relates to a system and method for valuating a plurality of brands by using an online stock trading technique implemented between a server and a plurality of clients connected through a communication network such as Internet.

One of the attractive aspects of a brand name is that it can be effectively used to publicize the merchandize carrying the brand for its recognition by the general public. For this reason, most companies spend substantial amounts of money to advertise their brands through mass media including television, radio, newspapers and the like.

Meanwhile, as for the valuation of a brand, it is not an easy task to carry out the valuation correctly and efficiently; and, therefore, many companies pay extra money to assessment organizations, e.g., advertising agencies, consulting agencies or the like, so as to valuate their brands. In general, the assessment organizations estimate a brand value by conducting internal research based on their own brand evaluation methodologies, which may not correctly reflect the current perception thereof conceived by the relevant consumers.

Alternatively, the companies sometimes conduct surveys to valuate their brands. However, conducting a survey to have a proper valuation of a brand is not only costly, but also time consuming. Therefore, an improved system and method is still needed to efficiently and accurately valuate a brand.

It is, therefore, a primary object of the present invention to provide a system and method for valuating brands by employing an online stock trading technique, wherein clients using the system participate in an inventive brand stock trading process in which stock prices of all brands are determined under same stock transaction conditions by using the online stock trading technique, thereby estimating the recognition rates of the brands based on the determined brand stock prices.

In accordance with one aspect of the present invention, there is provided a system for valuating a plurality of brands by using an online stock trading technique implemented between a server and a multiplicity of clients, which comprises:
a communication network;
client terminals associated with the clients and connected to the communication network, wherein the clients trade stocks for the brands via the communication network; and
a server connected to the communication network for performing a stock trading process requested by the client terminals to thereby valuate the brands based on stock prices for the brands resulting from the stock trading process.

In accordance with another aspect of the present invention, there is provided a method for valuating a plurality of brands by using an online stock trading technique implemented between a server and a multiplicity of clients via a communication network, which comprises the steps of:
(a) providing a preset amount of cyber-money when the clients have access to the server via the communication network;
(b) performing stock transactions for the brands in a brand stock market provided by the server by using the cyber-money; and
(c) valuating the brands based on stock prices determined through the stock transactions for the brands.

The above and other objects and features of the present invention will become apparent from the following description of preferred embodiments given in conjunction with the accompanying drawings, in which:
Fig. 1 shows a brand valuation system in accordance with the present invention;
Fig. 2 exemplifies a brand stock trading window in accordance with the present invention;
Fig. 3 illustrates a registration process for a brand stock market in accordance with the present invention;
Fig. 4 provides an exemplary process providing additional cyber-money to a client in accordance with the present invention; and
Fig. 5 represents a buying and selling process in the brand stock market.

Hereinafter, with reference to the drawings, some of the preferred embodiments of the present invention will be explained in detail.

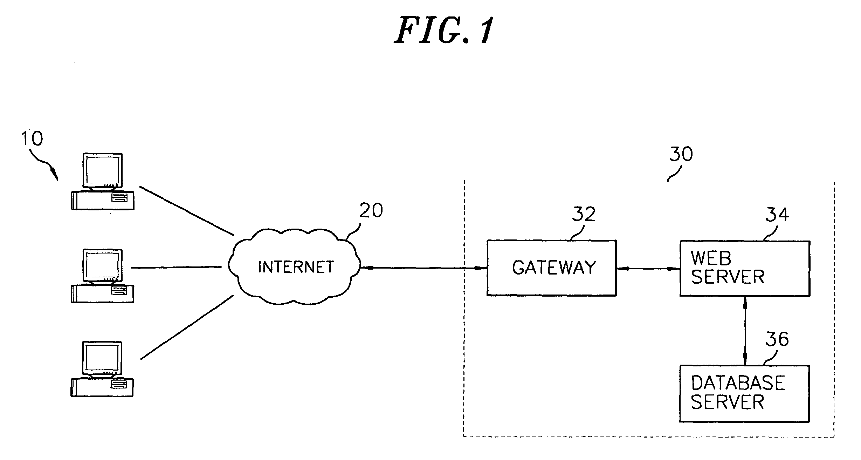

Referring to Fig. 1, there is illustrated a brand valuation system in which an inventive online brand valuation process is performed, wherein the brand valuation system comprises a group of client terminals 10, e.g., personal computers (PCs), an Internet 20 and an online brand valuation server 30 in accordance with the present invention. The group of client terminals 10 and the online brand valuation server 30 are connected through the Internet 20.

Further, the online brand valuation server 30 includes a gateway unit 32, a web server 34 and a database server 36.

As illustrated in Fig. 1, the gateway unit 32 is used to connect two communication networks, i.e., the web server 34 in the online brand valuation server 30 and the Internet 20.

A plurality of users, i.e., clients, can obtain web information from the web server 34 via the Internet 20 by using web browsers installed in the client terminals 10 to thereby valuate brands based on the web information. For instance, the brands can be valuated based on their respective stock prices determined as the clients trade stocks for the brands, i.e., brand stocks, in a web site provided by the web server 34. Herein, the brand has an inclusive meaning, i.e., including a company name, a goods name, a domain name and the like.

The database server 36 stores data required in performing the operations of the web server 34.

As depicted above, the online brand valuation server 30 provides the web site in which the brand stock trading operations are performed between the clients and the web server 34.

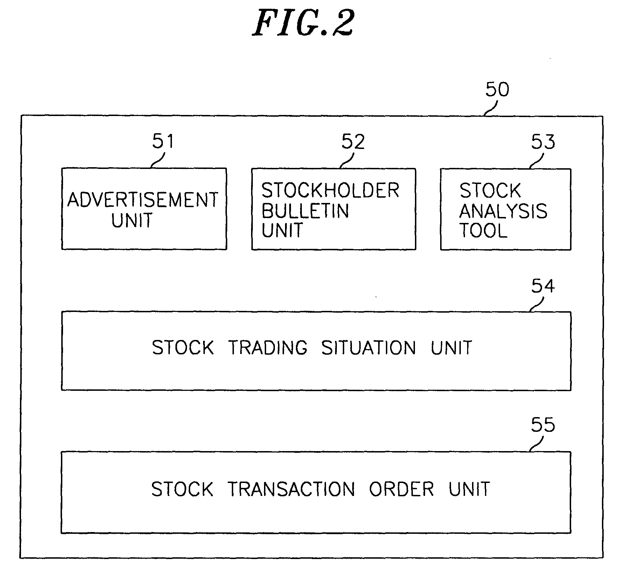

The configuration and operations of the inventive brand valuation web site will be described hereinafter with reference to Figs. 2 to 4.

Referring to Fig. 2, there is illustrated an exemplary brand stock trading window 50 representing the brand valuation web site, wherein the brand stock trading window 50 is displayed on a screen of the client terminal 10 when the client terminal 10, employing a communication device such as a modulator/demodulator (MODEM), a local area network (LAN) or the like, is connected to the online brand valuation server 30 via the Internet 20 so as to trade the brand stocks through the brand valuation web site.

In accordance with a preferred embodiment of the present invention, as shown in Fig. 2, the brand stock trading window 50 has an advertisement unit 51, a stockholder bulletin unit 52, a stock analysis tool 53, a stock trading situation unit 54 and a stock transaction order unit 55.

The client terminal 10 displays the brand stock trading window 50 on its screen based on window construction information for the stock transaction transferred from the web server 34 via the gateway unit 32 and the Internet 20, to thereby provide the clients with a stock trading service, a stock price inquiry service, a brand advertisement service and the like, wherein the web server 34 obtains the window construction information from the database server 36.

More specifically, the brands are advertised through the advertisement unit 51 showing, e.g., alphanumeric images, graphic images and/or moving pictures related to the brands, based on brand advertisement information provided from the web server 34.

By using the stockholder bulletin unit 52, the clients, i.e., stockholders, can notify and share information on the brands and discuss about the tendency of the stock prices of the brands. The process of uploading opinions or suggestions of the stockholders and the information on the brands on the stockholder bulletin unit 52 follows conventional data uploading techniques well known in the prior art. Therefore, the explanation for the process will be omitted for the sake of simplicity.

The stock analysis tool 53 introduces information on companies possessing the brands, e.g., investor relations (IR) advertisements and e-mail addresses; provides a stock trading analysis chart; and allows the clients to link up with a home page of each brand or its company.

The stock trading situation unit 54 displays the present stock trading status showing, e.g., a current price, the highest price, the lowest price and a trade volume for a brand stock selected by a client.

Therefore, by appropriately using the information obtained from the stockholder bulletin unit 52, the stock analysis tool 53 and the stock trading situation unit 54, the clients can buy or sell the brand stocks by entering the number of the brand stocks to be traded and purchase prices or sell prices of the brand stocks in a manner similar to a real stock transaction manner through the use of the stock transaction order unit 55.

To assist the brand stock transaction in this web site, an inventive online brand stock market is provided as follows.

Similar to a real stock market, the online brand stock market implemented in this web site is classified into a brand stock exchange, corresponding to a combination of a real stock exchange and a stock company, in which stocks for famous brands are traded and a brandsdaq, corresponding to an out-of-the market, in which stocks for new brands and less known brands are traded. In addition to the famous and new brands, brands not in a circulation and brands in a circulation only in foreign countries can be also listed and traded in the brand stock market.

In this web site, the web site operator also plays the roles of a supervisory office, the brand stock exchange, a stockbrokerage association and the like in the real stock market so as to effectively manage the brand stock market.

The clients registered to the web site participate in the brand stock market as general investors and fund managers are elected among the general investors. The amounts of money operated by the fund managers vary depending on abilities of the fund managers. The fund managers can get appropriate incentive according to their earning rates from the web site operator.

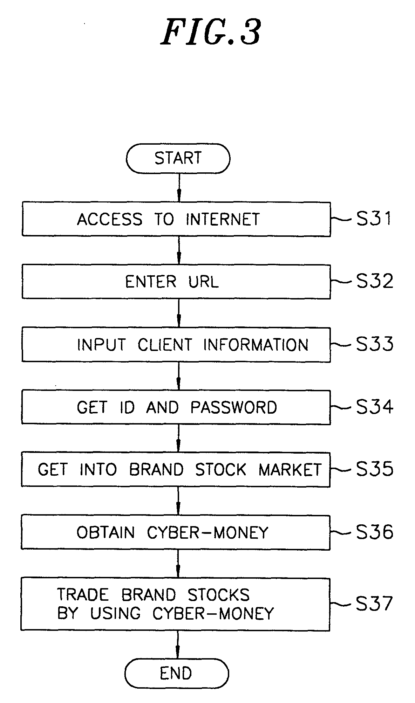

Prior to the trading of the brand stocks in the brand stock market illustrated above, a PC user has to complete a registration process. Referring to Fig. 3, there is provided a flow chart showing the registration process for the brand stock market in accordance with the present invention.

In step S31, a PC user, i.e., a potential client, accesses the Internet 20 by driving a web browser installed in the PC 10.

After accessing the Internet 20, in step S32, the potential client enters a universal resource locator (URL) for the brand stock valuation web site provided by the web server 34 in the online brand valuation server 30 via the Internet 20 and the gateway unit 32.

In step S33, the potential client registers for the brand valuation web site by inputting client information representing its name, home address, telephone number, annual salary, company name, etc.

Then, in step S34, the potential client gets a permission for its own identification (ID) and password from the web server 34 in the online brand valuation server 30, wherein the ID and the password for the client are stored in the database server 36 together with the client information.

Once the registration process is successfully performed, the client can get into the brand stock market provided by the web site by entering its own ID and password in step S35.

When the client enters the brand stock market through the registration process, in step S36, the client receives first a preset amount of cyber-money from the web server 34 and the information on the cyber-money provided to the client is stored in the database server 36.

Thereafter, in step S37, the client can trade the brand stocks in the stock market by using the cyber-money. In the meanwhile, the brand values can be estimated based on their respective stock prices being traded in the brand stock market.

In addition to the basic cyber-money received at the beginning, the client can obtain additional cyber-money by participating in poll-and-researches and events or by clicking advertisements for the brands provided by the web server 34. In this case, although the value of cyber-money is much less than that of real cash, it can be exchanged with real cash if the amount of cyber-money possessed by a client reaches a predetermined amount. If the client requests the money exchange, the web site operator provides corresponding real cash to the client.

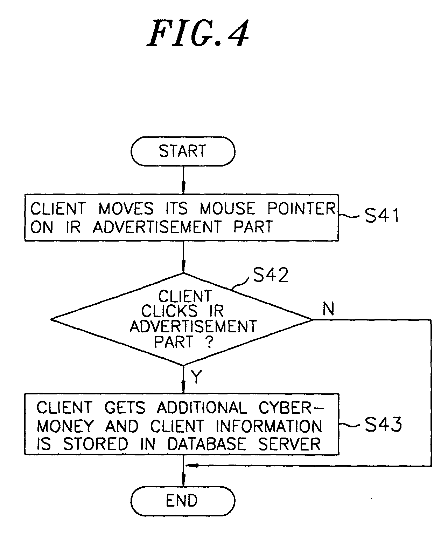

For instance, referring to Fig. 4, there is shown a process providing the additional cyber-money to the client when the client clicks the IR advertisement part introduced by the stock analysis tool 53.

In step S41, the client moves its mouse pointer on the IR advertisement part for a certain company provided through the stock analysis tool 53.

Then, in step S42, the web server 34 checks whether the client clicks the IR advertisement part or not.

When the client clicks the IR advertisement part, the web server 34 provides the client with a fixed amount of cyber-money in step S43 and stores information on the additional cyber-money provided to the client in the database server 36. Thereafter, the web server 34 can detect how many times the IR advertisement for the certain company is clicked by checking the client information stored in the database server 36 associated with the certain company and can use the client information stored in the database server 36 as marketing materials to maximize the advertisement effect. On the other hand, if the client does not click the IR advertisement part, this process is terminated.

Meanwhile, to make the clients effectively perform the brand stock transactions by using their cyber-money, the brand valuation web site is operated based on several administrative regulations described below.

In the web site, the numbers of stocks and par values for all brands should be identical to each other, so that the brands can be valuated by comparing only the respective stock prices for the brands. For this, there are no capital increase with consideration, no increase of capital stock without consideration and no stock split for individual listed brands, whereas, in a particular case, there can occur the capital increase with consideration, the increase of capital stock without consideration and the stock split for all of the listed brands.

In the meantime, the numbers of stocks for all of the brands to be traded can be uniformly increased in proportion to, e.g., a rate of [cyber-money increasing rate/price index of stocks×100] since the total amount of cyber-money increases as the number of clients increases. In this case, the increase of the numbers of stocks occurs once a week. The web site operator sells the number of stocks to be increased through the stock exchange to the general investors. On the other hand, if the number of stocks to be traded should be reduced according to the above rate, the web site operator buys a fixed number of stocks determined based on the above rate from the general investors through the brand stock market to thereby reduce the total number of stocks to be traded.

In case of listing new brands, the web site operator first notifies public offering for listing the new brands on a bulletin board assigned to the new brand listing for a fixed period to thereby gather public opinions for the new brand listing from the general investors and determine the number of brands to be listed. The number of brands to be listed is not limited. Then, if the clients agree to the new brand listing and the brands to be listed are determined, the web site operator makes the public offering for the new brand listing.

Specifically, when listing a new brand, the number of stocks for the new brand, i.e., the quantity of public offering, is identical to those of all of listed brands at a beginning day of the public offering and the stock price for the new brand, i.e., the price of the public offering, is determined as a stock price average of listed brands included in a same category of business that the new brand is included. In this case, if there is no listed brand in the same category, the price of the public offering for the new brand is determined by taking the price index of stocks into consideration.

The stock assignment in the public offering is performed on a unit of 10 stocks and the public offering methods are identical to that in the real stock market, e.g., public offering by a competition rate, auction or the like.

When assigning the stocks in the public offering, the fractional stocks less than 10 are returned to the brand stock market as forfeited shares and in turn sold within one week through the brand stock market.

A deposit for participating in the public offering is 100% of an amount of money required to subscribe desired stocks. It is possible to cancel the subscription at any time before the public offering is closed.

The stock trading of this brand stock market opens from 7 a.m. to 11 p.m. for 6-days from Monday to Saturday. Other services except the stock trading can be available for 24-hours a day, 7-days a week. However, under the circumstances, the above trading opening time can be changed.

In addition to the above illustration, in the brand stock exchange, the day's range of variation of the stock price is limited to ±15% of a closing price of the previous day and the stocks are traded on a unit of 10 stocks. On the other hand, in the brandsdaq, the day's range of variation of the stock price is limited to ±12% of a closing price of the previous day and the stocks are traded on a unit of one stock. These systems are identical to those in the real stock exchange and the real out-of-the market, respectively.

Further, the buying and selling systems for the brand stocks also follow those of the real stock market.

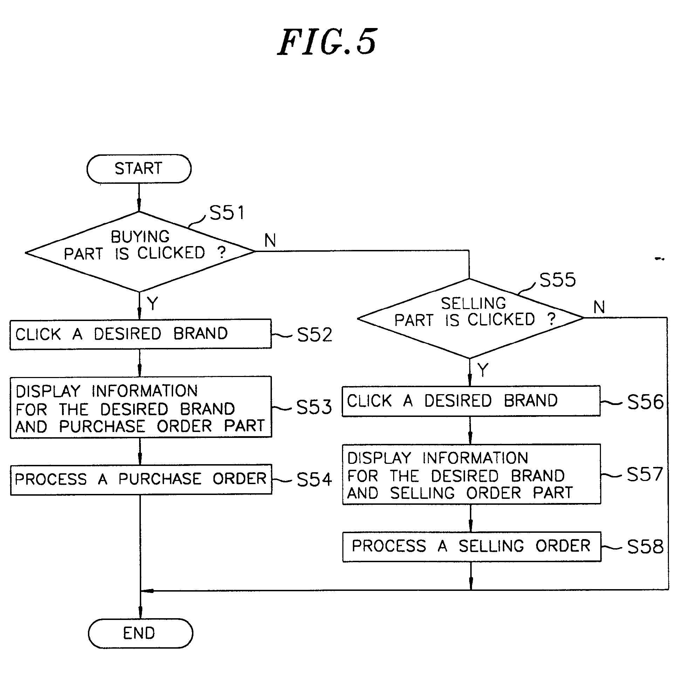

Referring to Fig. 5, there is exemplified a buying and selling process of the brand stocks.

In step S51, the web server 34 determines whether or not a client clicks a buying part on the stock transaction order unit 55.

After selecting the buying part, the client clicks a desired brand in step S52.

In step S53, in response to the above action in the step S52, the web server 34 provides detailed information on the desired brand and information on a purchase order part to the client terminal 10 to thereby display the information on a screen of the client terminal 10.

Then, if the client places an order by inputting the desired number of stocks and a desired stock price for the selected brand, the web server 34 processes the purchase order in step S54 and then this procedure is terminated.

On the other hand, if it is determined that the client does not click the buying part in step S51, in step S55, the web server 34 checks whether the client clicks a selling part on the stock transaction order unit 55.

After clicking the selling part, the client clicks a desired brand in step S56.

In step S57, in response to the above action in the step S56, the web server 34 provides detailed information on the brand clicked in the step S56 and information on a selling order part to the client terminal 10 to thereby display the information on the screen of the client terminal 10.

If the client completes placing a selling order by inputting the desired number of stocks and a desired stock price for the clicked brand, the web server 34 processes the selling order in step S58 and then this process is completed.

In the above process, if the client clicks neither the buying part nor the selling part in the steps S51 and S55, this process is immediately terminated.

Besides the above systems and configuration, since a lot of systems and configuration employed in the brand stock market reflect those in the real stock market, the explanation thereof is omitted for the sake of simplicity.

As described above, by using the brand stock market which has configurations similar to those in the real stock market and is provided by the brand stock trading web site in accordance with the present invention, the clients, i.e., Internet users registered to the above web site, can experience the stock transaction without any economic risk and in the meantime, the brands can be advertised to the general public and be valuated cost-effectively and rapidly by the general public, wherein the brand valuation can be obtained by simply comparing their stock prices determined in the brand stock market.

While the present invention has been described with respect to the particular embodiments, it will be apparent to those skilled in the art that various changes and modifications may be made without departing from the scope of the invention as defined in the following claims.

The features disclosed in the foregoing description, in the claims and/or in the accompanying drawings may, both separately and in any combination thereof, be material for realising the invention in diverse forms thereof.

## Claims

1. A system for advertising and valuating a plurality of brands by using an online stock trading technique implemented between a server and a multiplicity of clients, which comprises:
a communication network;
client terminals associated with the clients and connected to the communication network, wherein the clients trade stocks for the brands via the communication network; and
a server connected to the communication network for performing a stock trading process requested by the client terminals to thereby valuate the brands based on respective stock prices for the brands resulting from the stock trading process.

2. The system as recited in claim 1, wherein the server includes:
a gateway unit for connecting the server to the communication network;
a web server for providing a brand stock market in which the stock trading process is performed; and
a database server for storing data required in performing the stock trading process in the web server.

3. The system as recited in claim 2, wherein the brand stock market is classified into a brand stock exchange and a brandsdaq, and wherein stocks for famous brands are traded in the brand stock exchange and stocks for new and less known brands are traded in the brandsdaq.

4. The system as recited in claim 2, wherein the clients are given a preset amount of cyber-money from the web server when entering the brand stock market via the communication network and trade the stocks for the brands by using the given cyber-money.

5. The system as recited in claim 4, wherein the clients get additional cyber-money by participating in poll-and-researches or events, or by clicking advertisements for the brands provided by the web server.

6. The system as recited in claim 2, wherein the par value and number of stocks for a brand are identical to those of the remaining brands.

7. The system as recited in claim 6, wherein the respective numbers of stocks for the brands increase as the number of the clients increases.

8. The system as recited in claim 7, wherein the respective numbers of stocks for the brands uniformly increase in proportion to a rate of: cyber-money increasing rate/price index of stocks × 100.

9. The system as recited in claim 6, wherein there are capital increase with consideration, increase of capital stock without consideration and stock split only for all of the brands.

10. The system as recited in claim 2, wherein, when listing a new brand through public offering, the number of stocks for the new brand is identical to those of the brands at a beginning day of the public offering and a stock price for the new brand is determined as a stock price average of brands included in a same category of business that the new brand is included.

11. The system as recited in claim 1, wherein the communication network is Internet.

12. A method for valuating a plurality of brands by using an online stock trading technique implemented between a server and a multiplicity of clients via a communication network, which comprises the steps of:
(a) providing a preset amount of cyber-money when the clients access the server via the communication network;
(b) performing stock transactions for the brands in a brand stock market provided by the server by using the cyber-money; and
(c) valuating the brands based on respective stock prices determined through the stock transactions for the brands.

13. The method according to claim 12, wherein the brand stock market is classified into a brand stock exchange and a brandsdaq, and wherein stocks for famous brands are traded in the brand stock exchange and stocks for new and less known brands are traded in the brandsdaq.

14. The method according to claim 12, wherein the clients get additional cyber-money by participating in poll-and-researches or events, or by clicking advertisements for the brands provided by the server.

15. The method according to claim 12, wherein the par value and number of stocks for a brand are identical to those of the remaining brands.

16. The method according to claim 15, wherein the respective numbers of stocks for the brands increase as the number of the clients increases.

17. The method according to claim 16, wherein the respective numbers of stocks for the brands equally increase in proportion to a rate of: cyber-money increasing rate/price index of stocks × 100.

18. The method according to claim 15, wherein there are capital increase with consideration, increase of capital stock without consideration and stock split only for all of the brands.

19. The method according to claim 12, wherein, when listing a new brand through public offering, the number of stocks for the new brand is identical to those of the brands at a beginning day of the public offering and a stock price for the new brand is determined as a stock price average of brands included in a same category of business that the new brand is included.

20. The method according to claim 12, wherein the communication network is Internet.
